# FASCICULE DE BREVET EUROPEEN

(11) **EP 0 646 809 B1**
(45) Date de publication et mention de la délivrance du brevet: **25.02.1998**
(21) Numéro de dépôt: 94402140.1
(22) Date de dépôt: 26.09.1994
(51) Int. Cl.: G01V 1/22, G01V 1/24

(54) **Méthode et dispositif d'acquisition de signaux sismiques**
Verfahren und Vorrichtung zur Erfassung von seismischen Signalen
Method and device for acquisition of seismic signals

(30) Priorité: 30.09.1993 FR 9312249
(43) Date de publication de la demande: 05.04.1995
(73) Titulaire: INSTITUT FRANCAIS DU PETROLE, 92502 Rueil-Malmaison (FR)
(72) Inventeur: Grouffal, Christian, F-92500 Rueil-Malmaison (FR); Rialan, Joseph, F-92190 Meudon (FR)

(56) Documents cités:
- EP-A- 0 562 939
- GB-A- 1 239 585
- US-A- 4 031 504

## Description

La présente invention concerne une méthode et un dispositif d'acquisition de signaux captés par des récepteurs sismiques avec adaptation cyclique des gains d'amplification appliqués.

L'invention est plus particulièrement adaptée à des chaînes d'acquisition où la numérisation des signaux est effectuée de façon continue en utilisant des convertisseurs du type sigma-delta.

Les méthodes actuelles de prospection sismique comportent l'utilisation d'appareils d'acquisition répartis sur une zone à explorer. Ils sont destinés chacun à collecter les signaux reçus par un ou plusieurs récepteurs tels que des géophones ou des hydrophones couplés avec le terrain, en réponse à des ébranlements émis par une source sismique et renvoyées par les discontinuités du sous-sol. Les signaux sont amplifiés, numérisés et mémorisés dans des mémoires locales avant leur transmission en temps réel ou différé à une station centrale par une voie de transmission telle qu'un câble, un fibre optique, un canal hertzien, etc.

Des systèmes sismiques d'acquisition et de transmission sont décrits par exemple dans les brevets FR-A-2.627.652, 2.599.533, 2538.561, 2.511.772 ou la demande de brevet FR 92/12.388 au nom du demandeur.

Les systèmes d'acquisition de données peuvent comporter un contrôle automatique du gain adapté au type de moyens de numérisation utilisés, permettant de profiter de leur dynamique de conversion souvent élevée. La numérisation des signaux dans les chaînes d'acquisition conventionnelles, est en général effectuée en prélevant sur les signal analogiques, des échantillons successifs au moyen d'échantillonneurs-bloqueurs, et en les appliquant à un convertisseur analogique-numérique. Pour ajuster le gain, on peut procéder par exemple comme décrit dans le brevet FR-A- 2.441.956 du demandeur. Un gain fixe étant dans un premier temps appliqué à un échantillon, on détermine en fonction du mot numérique correspondant, le gain optimal qu'il faut lui appliqué dans un deuxième temps pour obtenir un mot numérique à pleine résolution.

Dans les systèmes d'acquisition les plus récents, la numérisation des signaux sismiques utilisant la technique du sur-échantillonnage. échantillonnage. Un modulateur de type sigma-delta les signaux analogiques qui lui sont appliqués et produit à fréquence élevée des mots numériques à faible résolution. Un filtre dit décimateur est utilisé pour effectuer une sommation glissante d'un certain nombre n des mots numériques issus du modulateur et produire des mots numériques à résolution plus élevée à une fréquence plus réduite. Un ensemble de numérisation de ce type est décrit par exemple dans le brevet FR-A-2.666.946 du demandeur.

L'utilisation de ces modulateurs delta-sigma sur-échantillonnant les signaux de façon continue, ne permet pas d'effectuer à chaque blocage d'échantillon, les contrôles de gain des préamplificateurs comme on le faisait sur les moyens de numérisation antérieurs.

Il n'est cependant pas possible dans la pratique d'imposer aux pré-amplificateurs d'acquisition, depuis la station centrale, une valeur de gain commune du fait notamment des modifications apportées au système d'émission-réception au cours d'une même séance de prospection. Pour certaines configurations, les récepteurs sismiques les plus proches de la source sismique bénéficient d'un gain optimal et de toute la dynamique de conversion du convertisseur (les signaux qu'ils produisent sont codés sur 24 bits par exemple). Les signaux sismiques captés par des récepteurs plus éloignés de la source, sont plus faibles et se retrouvent codés avec un nombre beaucoup plus faible de bits (de 10 à 13 par exemple). La source sismique étant progressivement déplacée le long du profil au cours d'une même séance d'enregistrement, les distances précédentes entre elle et les différents récepteurs changent ce qui modifie par conséquent la dynamique de conversion effectivement appliquée à un même "trace" au cours des cycles successifs.

La méthode d'acquisition selon l'invention permet d'effectuer automatiquement une adaptation cyclique du gain appliqué à des signaux sismiques, à intervalles de temps réguliers, dépendant de la durée des cycles successifs d'émission-réception sismique effectués (qui sont de l'ordre de quelques secondes dans la pratique courante), ces signaux étant collectés par un dispositif d'acquisition comportant au moins un appareil d'acquisition disposé dans une zone d'exploration pour collecter les signaux reçus par un ou plusieurs capteurs sismiques couplés avec les formations en réponse à des ébranlements appliqués par une source, cet appareil comprenant au moins un amplificateur associé à des circuits de commutation de gain et susceptible d'appliquer aux signaux sismiques un certain nombre p de gains d'amplification différents, (g1, g2, ... , gp), des moyens de numérisation du type à sur-échantillonnage produisant des mots numériques successifs (représentatifs d'échantillons numérisés), des moyens de stockage des mots numériques et un ensemble de pilotage incluant une unité de traitement.
La méthode est caractérisée en ce qu'elle comporte :
- la sélection parmi les mots numériques produits au moins pendant la durée d'un cycle par chaque appareil d'acquisition, d'un mot numérique représentatif de l'énergie d'au moins un signal sismique reçu,
- la comparaison du mot numérique sélectionné avec plusieurs mots numériques représentatifs de valeurs-seuils délimitant plusieurs plages sur l'échelle de variation admissible par les moyens de numérisation,
- le choix en fonction de la plage, de la valeur de gain optimale applicable à l'amplificateur pour au moins un cycle ultérieur, et
- la commande des circuits de commutation pour l'application de cette valeur optimale du gain.

Suivant un mode de mise en oeuvre, la méthode comporte le choix d'une valeur de gain en fonction de plusieurs mots numériques sélectionnés à l'issue de plusieurs cycles successifs.

Suivant un autre mode de mise en oeuvre, la méthode comporte le choix d'une valeur de gain optimale en fonction de variations à l'intérieur des plages, observée sur plusieurs cycles successifs, de la valeur des mots numériques sélectionnés, qu'il s'agisse de variations en sens et/ou en amplitude.

Suivant un autre mode de mise en oeuvre, dans le cas où chaque appareil d'acquisition collecte plusieurs signaux captés par plusieurs récepteurs, le choix du gain optimal est effectué en fonction de plusieurs mots numériques sélectionnés correspondant à plusieurs de ces signaux, de façon à mieux tenir compte éventuellement de défauts ou de disparités de couplage des récepteurs avec le sol.

Les comparaisons des mots numériques peuvent être effectuées au fur et à mesure de leur production ou bien encore à la fin des cycles, et ceci sur un intervalle de temps sélectionné.

Par l'application de la méthode, on réalise automatiquement une adaptation du gain d'amplification de chaque chaîne d'acquisition, à intervalles de temps réguliers. De préférence, cette adaptation est effectuée entre tous les cycles d'émission-réception consécutifs, c'est-à-dire en pratique à intervalles de quelques secondes. Ceci permet de tenir compte notamment des modifications apportées à la disposition de l'ensemble d'émission-réception sismique qui est déplacé sur le terrain au fur et à mesure qu'il progresse le long d'un profil sismique étudié.

Le dispositif d'acquisition pour la mise en oeuvre de la méthode selon l'invention, comporte au moins un appareil d'acquisition disposé dans une zone d'exploration pour collecter les signaux reçus par un ou plusieurs récepteurs sismiques couplés avec les formations en réponse à des ébranlements appliqués, cet appareil comprenant au moins un amplificateur associé à des circuits de commutation de gain et susceptible d'appliquer aux signaux sismiques un certain nombre p de gains d'amplification différents, g1, g2, ... , gp, des moyens de numérisation du type à sur-échantillonnage produisant des mots numériques successifs (représentatifs d'échantillons numérisés), des moyens de stockage des mots numériques, un ensemble de pilotage incluant une unité de traitement, et des moyens de transmission de données sur une voie de transmission.

Il est caractérisé en ce qu'il comporte des moyens de contrôle de gain adaptés à:
- sélectionner parmi les mots numériques produits par chaque appareil d'acquisition, au moins pendant la durée d'un cycle, un mot numérique représentatif de l'énergie des signaux sismiques reçus par chaque appareil d'acquisition,
- comparer le mot numérique sélectionné avec plusieurs mots numériques représentatifs de valeurs-seuils délimitant plusieurs plages sur l'échelle de variation admissible par les moyens de numérisation,
- choisir en fonction de la plage, la valeur de gain optimale applicable à l'amplificateur pour au moins un cycle ultérieur, et
- commander les circuits de commutation pour sélectionner cette valeur optimale du gain.

Les moyens de contrôle de gain sont adaptés à choisir une valeur de gain en fonction de plusieurs mots numériques sélectionnés à l'issue de plusieurs cycles successifs, ou bien encore selon les variations de la valeur des mots numériques sélectionnés à l'intérieur des plages, entre plusieurs cycles successifs.

De préférence, les moyens de contrôle sont disposés dans chaque appareil d'acquisition plutôt que dans la station centrale. De cette façon, on évite les transferts de données à grand débit vers la station centrale, qui autrement seraient néccessaires.

D'autres caractéristiques et avantages de la méthode et du dispositif selon l'invention, apparaîtront à la lecture de la description ci-après de modes de réalisation décrits à titre d'exemples non limitatifs, en se référant aux dessins annexés où:
- la Fig.1 montre schématiquement une répartition d'un système d'émission-réception sismique sur le terrain; et
- la Fig.2 montre schématiquement un appareil d'acquisition équipé de moyens de traitement adaptés à effectuer l'ajustement cyclique du gain appliqué.

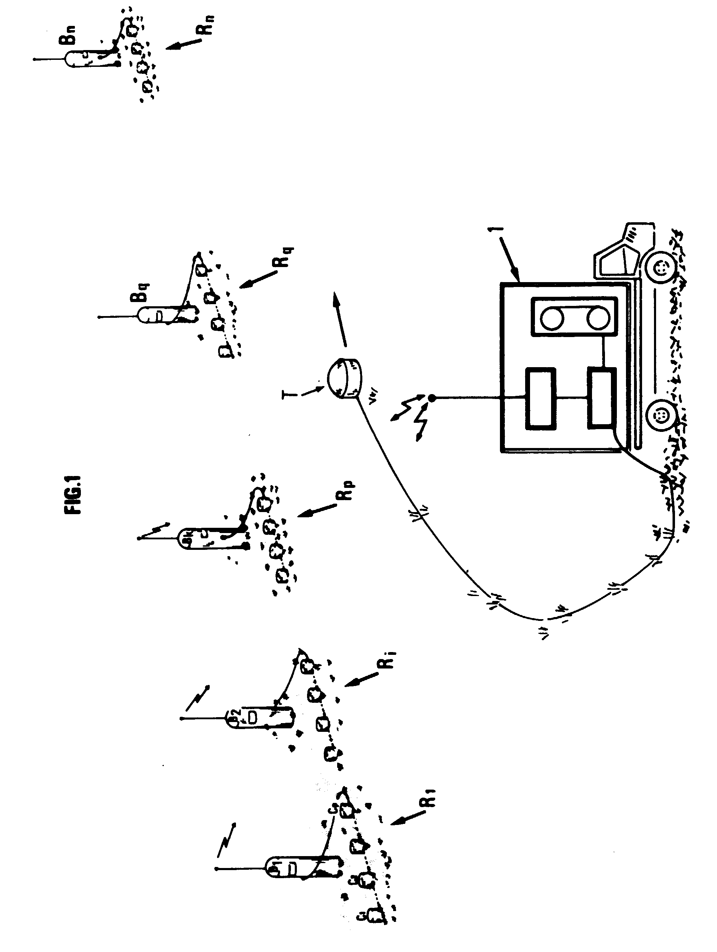

On utilise sur le terrain, un ensemble de prospection sismique comportant (Fig.1) une source d'ondes sismiques T telle qu'un vibrateur ou une source impulsionnelle d'un type connu, et un système de réception et d'acquisition pour collecter les signaux reçus par un un grand nombre de récepteurs (ou traces) R₁, R₂, ... Rn qui sont répartis le long d'un profil sismique à explorer. Chacun de ces récepteurs est constitué chacun le plus souvent d'un groupe de capteurs élémentaires interconnectés. Les signaux sismiques reçus sont appliqués à des appareils d'acquisition qui sont installés dans des - boîtiers B₁, B₂, ..., Bn. Ces appareils les collectent avant de les transmettre à une station centrale de commande et d'enregistrement 1 installé sur un véhicule.

L'exploration sismique d'un profil sismique comporte la réalisation d'un ou plusieurs cycles d'émission-réception pour chaque position de la source S et le déplacement progressif de celle-ci le long de ce profil. Quand on déplace la source, on l'éloigne par exemple des boitiers d'acquisition B1 à Bk (Fig.1) ainsi que des récepteurs sismiques R1 à Rk associés et on la rapproche des récepteurs associés aux autres (Bk+ 1 à Bn). L'amplitude des ondes captées par les différents récepteurs peut donc varier considérablement. au fur et à mesure du déroulement de chaque séance d'exploration.

La méthode selon l'invention permet, on l'a vu de compenser automatiquement les variations d'amplitude liées notamment à ces déplacements. Elle est mise en oeuvre de façon autonome par les appareils d'acquisition tels que décrits ci-après.

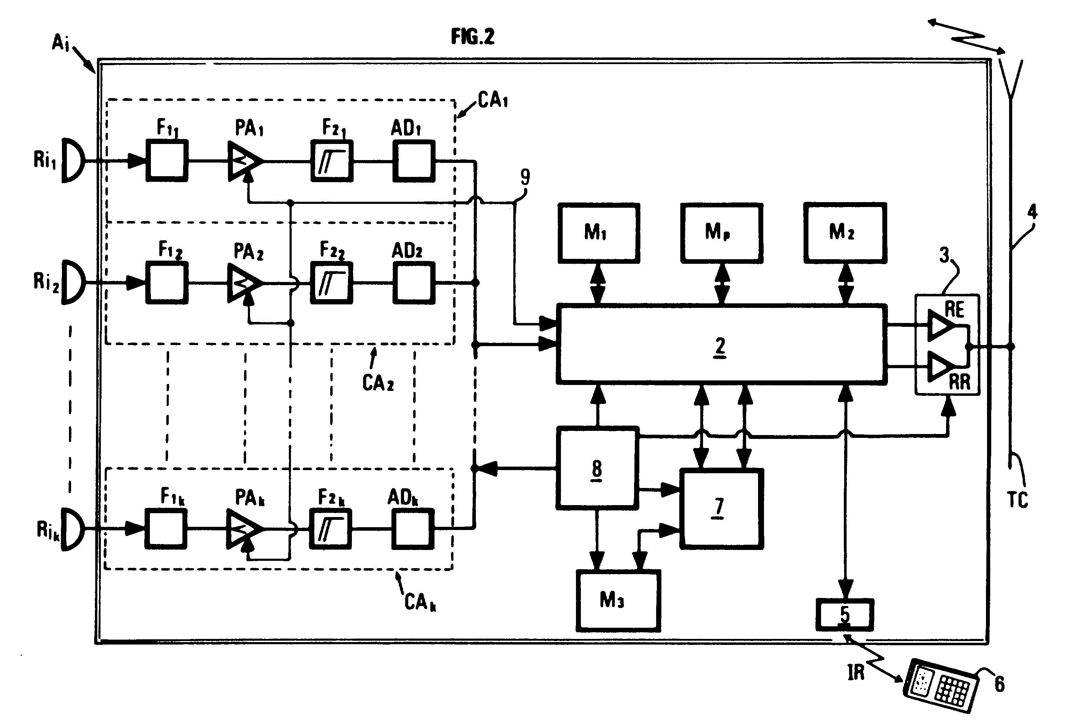

L'appareil d'acquisition Ai (Fig.2) dans chaque boîtier d'acquisition B1 à Bn est adapté à collecter les signaux reçus par un récepteur unique R (cas représenté sur la figure 1) ou plus généralement par un certain nombre k de récepteurs différents Ril ... Rik , comme le montre la Fig. 2. Chaque appareil d'acquisition Ai a pour fonction de numériser les signaux des récepteurs associés et de les mémoriser. Le poste central 1 commande les déclenchements successifs de la source S, l'acquisition par les différents appareils, des signaux renvoyés par les discontinuités du sous-sol et reçus par les récepteurs R1 à Rn et ensuite, la centralisation des données mémorisées. Sur commande du poste central 1, chaque appareil d'acquisition dans les boitiers B₁ à Bₙ lui transfère les données qu'il a mémorisées par la voie de communication adaptée. A cet égard, on peut utiliser avantageusement les systèmes d'acquisition décrits dans les brevets précités avec les modifications propres à l'invention qui vont être décrites ci-après.

Chaque appareil d'acquisition Aᵢ (Fig.2) comporte donc par exemple k chaînes d'acquisition CA₁ à CAₖ recevant respectivement les k signaux et comportant chacune un filtre passe-bas F₁₁, F₁₂, ... Fₖ du type V.H.F, un amplificateur PA₁, PA₂ ... PAₖ dont le gain est susceptible par commutation de réseaux de contre-réaction non représentés, de prendre plusieurs valeurs de gain différentes, (4 valeurs g1, g2, g3, g4 par exemple respectivement de 12, 24, 36 et 48 dB), un filtre passe-haut F₂₁, F₂₂, ... F2ₖ et un convertisseur analogique-numérique (C.A.N) AD₁, AD₂, ..., ADₖ pour convertir les signaux analogiques amplifiés et filtrés en mots numériques. La numérisation est assurée par des modulateurs de type sigma-delta associés à des filtres décimateurs comme décrit dans le demande de brevet FR-A-2.666.946 précitée.

Les sorties de toutes les chaînes CA1 à CAk sont connectées à un microprocesseur de gestion 2 traitant les mots numériques de 16 à 32 bits par exemple, qui est programmé pour gérer l'acquisition et les échanges avec la station centrale 1. Au microprocesseur 2 sont associés deux blocs de mémoire M₁ et M₂ et une mémoire Mp pour les programmes. Le processeur 2 est connecté à une unité 3 d'émission-réception par radio ou par ligne, adaptée à la voie employée pour la communication avec la station centrale 1 (Fig.1). S'il s'agit d'une voie hertzienne, l'unité 3 comporte un radio-émetteur RE et un radio-récepteur RR qui communique avec une antenne 4. Une unité d'interface 5 décrite dans le brevet FR 2.608.780 précité, permet en outre une communication par rayons infra-rouges avec un boîtier d'initialisation 6 grâce auquel un opérateur peut éventuellement communiquer au processeur de gestion 2, des instructions d'adressage et de sélection des paramètres de fonctionnement des chaînes d'acquisition ainsi que des numéros d'identification affecté à l'appareil d'acquisition compte-tenu de sa position le long du profil sismique étudié.

Chaque appareil d'acquisition Aᵢ, comporte de préférence un processeur rapide 7 spécialisé dans certains calculs. Il peut s'agir par exemple d'un processeur à 32 bits à virgule flottante du type DSP 96002 fabriqué notamment par Motorola qui est associé à un dispositif du type DMA pour accélérer les transferts par blocs de données entre les deux processeurs 2 et 7. A ce dernier, est adjoint une mémoire de travail M3. Chaque appareil d'acquisition comporte aussi une alimentation électrique autonome 8.

Le processeur 2 agit en maître. Il a pour fonctions de réaliser le décodage des ordres transmis par la station centrale 1, et de gérer
- l'acquisition des signaux des récepteurs Rᵢ₁ à Rᵢₖ par les différentes chaînes d'acquisition,
- les transmissions en relation avec l'unité 3;
- les mémoires M₁ et M₂ pour le stockage temporaire des données;
- les entrées-sorties;
- les interruptions entre programmes;
- les échanges avec le processeur de calcul DSP 7 etc.

La méthode selon l'invention consiste essentiellement, comme on l'a vu, à sélectionner l'amplitude la plus grande que prend un signal sismique collecté durant un cycle d'émission-réception sismique avec un gain défini, et, en fonction de son niveau à l'intérieur d'une échelle de variation admissible par un ensemble de numérisation, à régler le nouveau gain qui lui sera éventuellement appliqué lors du cycle suivant par exemple.

Les opérations précédentes de sélection et de réglage du gain sont réalisés par le processeur spécialisé 7 sur commande du processeur de gestion 2 .

Le processeur 7 compare successivement tous les mots numériques formés au cours d'un même cycle d'émission-réception, représentatifs d'au moins un signal collecté (issu par exemple de la chaîne d'acquisition CA1). La sélection du mot numérique de plus grande amplitude Sm est effectuée à la fin de chaque cycle par tri des mots successivement générés par le convertisseur à sur-échantillonnage AD1 considéré, et mémorisés dans les mémoires M1 et M2.

Suivant un premier mode de réalisation, le processeur 7 compare la valeur absolue de chaque amplitude Sm avec plusieurs valeurs-seuils numérisées s1, s2 ... sp d'amplitudes inégales.

On choisit par exemple trois valeurs-seuils s1, s2 = s1/4, s3 = s1/16 et on sélectionne le gain à donner à l'amplificateur selon les critères suivants:

| **PLAGE DE VARIATION** | **GAIN APPLIQUÉ** |
|---|---|
| s1 < Sm | G = g1 |
| s2< Sm < s1 | G = g2 |
| s3< Sm < s2 | G = g3 |
| Sm < s3 | G = g4 |

Suivant un autre mode de réalisation, la sélection du gain est obtenue de façon plus fine en tenant compte non seulement de la position de l'amplitude Sm par rapport aux valeurs-seuils mais également de sa variation en sens à l'intérieur des plages définies par les valeurs-seuils, et éventuellement en module. Le sens et l'amplitude de ces variations sont détectées par comparaison entre au moins deux cycles successifs.

On choisit par exemple 6 valeurs-seuils s1, s2 = s1/2, s3 = s1/4, s4 = s1/8 et s5 = s1/16, s6 = s1/32 et on sélectionne le gain à donner à l'amplificateur selon les critères suivants:

| **PLAGE DE VARIATION** | **TENDANCE AUGMENTATION = + DIMINUTION = -** | **GAIN APPLIQUE** |
|---|---|---|
| s1 < Sm | | g = g1 |
| s2 < Sm < s1 | + | g = g1 |
| | - | g = g2 |
| s3 < Sm < s2 | | g = g2 |
| s4 < Sm < s3 | + | g = g2 |
| | - | g = g3 |
| s5 < Sm < s4 | | g = g3 |
| s6 < Sm < s5 | + | g = g3 |
| | - | g = g4 |

Le processeur peut encore tenir compte non seulement du sens de variation à l'intérieur d'une plage (+ ou -) mais également attendre que l'amplitude de la variation dépasse un certain incrément fixé pour intervenir sur modifier le gain à appliquer à l'amplificateur.

Le gain le plus approprié ayant été choisi d'après le signal issu de la chaîne de référence CA1, le processeur 2 commande (par des conducteurs de liaison 9) la commutation des circuits de réglage de gain associés à tous les amplificateurs PA1 à PAk de l'appareil d'acquisition.

Suivant une variante du mode de réalisation précédent, le processeur 7 réalise les opérations précédentes sur les signaux issus de toutes les chaînes d'acquisition et choisit le gain en fonction de l'un des mots numériques sélectionnés. De cette façon, l'appareil d'acquisition peut mieux tenir compte des disparités existant entre les récepteurs et/ou de défauts de couplage éventuels des différents capteurs avec le sol qui peuvent modifier le niveau des signaux effectivement captés.

Pour l'initalisation des appareils d'acquisition, la station centrale ou l'opérateur sur le terrain impose une valeur de gain standard. La valeur de gain la plus appropriée est déterminée de façon quasi-instantanée à l'issue du premier cycle sismique et réajustée à tous les cycles suivants si nécessaire.

## Revendications

1. Méthode d'acquisition de signaux captés par des récepteurs sismique avec adaptation cyclique automatique, faite à intervalles de temps réguliers, dépendant de la durée de cycles successifs d'émission-réception sismique, du gain qui leur est appliqué, ces signaux étant collectés par un dispositif d'acquisition comportant au moins un appareil d'acquisition (Ai) disposé dans une zone d'exploration pour collecter les signaux reçus par au moins un récepteurs sismiques (Ri1 -Rik) couplés avec les formations en réponse à des ébranlements appliqués par une source (T), cet appareil comprenant au moins un amplificateur (PA1-PAk) associé à des circuits de commutation de gain et susceptible d'appliquer aux signaux sismiques un certain nombre p de gains d'amplification différents, g1, g2, ... , gp, des moyens de numérisation (AD1-ADk) du type à sur-échantillonnage produisant des mots numériques successifs, des moyens de stockage (M) des mots numériques produits, et un ensemble de pilotage incluant une unité de traitement (2,7), caractérisée en ce qu'elle comporte :
- la sélection parmi des mots numériques produits par chaque appareil d'acquisition, au moins pendant la durée d'un cycle, d'un mot numérique représentatif de l'énergie maximale d'au moins un signal sismique reçu,
- la comparaison du mot numérique sélectionné avec plusieurs mots numériques représentatifs de valeurs-seuils délimitant plusieurs plages sur l'échelle de variation admissible par les moyens de numérisation,
- le choix en fonction de la plage, de la valeur de gain optimale applicable à l'amplificateur pour au moins un cycle ultérieur, et
- la commande des circuits de commutation de gain pour l'application de cette valeur optimale du gain.

2. Méthode selon la revendication 1, caractérisée en ce qu'elle comporte le choix d'une valeur de gain en fonction de plusieurs mots numériques sélectionnés à l'issue de plusieurs cycles successifs.

3. Méthode selon la revendication 1, caractérisée en ce qu'elle comporte le choix d'une valeur de gain optimale en fonction des variations de la valeur des mots numériques sélectionnés à l'intérieur des plages délimitées par les valeurs-seuils et sur la durée de plusieurs cycles successifs,.

4. Méthode selon la revendication 3, caractérisée en ce que le choix du gain optimal est effectué en tenant compte du sens et de l'amplitude desdites variations.

5. Méthode selon l'une des revendications précédentes, caractérisée en ce qu'elle comporte le choix d'une valeur de gain en fonction de plusieurs mots numériques sélectionnés correspondant respectivement à plusieurs signaux reçus par un même appareil d'acquisition.

6. Méthode selon l'une des revendications précédentes, caractérisée en ce la sélection du mot numérique représentatif de l'énergie des signaux reçus est effectuée par une comparaison directe des mots numériques successivement produits durant un intervalle de temps sélectionné.

7. Méthode selon l'une des revendications 1 à 6, caractérisée en ce que la sélection du mot numérique représentatif de l'énergie des signaux reçus est effectuée par une comparaison des mots numériques produits durant un intervalle de temps sélectionné, à l'issue de chaque cycle.

8. Dispositif d'acquisition de signaux captés par des récepteurs sismiques avec adaptation cyclique automatique faite à intervalles de temps réguliers, dépendant de la durée de cycles successifs d'émission-réception sismique, du gain qui leur est appliqué, comportant au moins un appareil d'acquisition (Ai) disposé dans une zone d'exploration pour collecter les signaux reçus par un ou plusieurs capteurs sismiques couplés avec les formations, en réponse à des ébranlements appliqués, cet appareil comprenant au moins un amplificateur (PA) associé à des circuits de commutation de gain et susceptible d'appliquer aux signaux sismiques un certain nombre p de gains d'amplification différents (g1, g2, ... , gp), des moyens de numérisation (AD) du type à sur-échantillonnage produisant des mots numériques successifs, des moyens de stockage (M) des mots numériques, un ensemble de pilotage incluant une unité de traitement (2,7) et des moyens de transmission de données sur une voie de transmission, caractérisé en ce quil comporte des moyens de contrôle de gain adaptés à :
- sélectionner parmi les mots numériques produits au moins pendant la durée d'un cycle, d'un mot numérique représentatif de l'énergie maximale d'au moins un signal sismique reçu, par chaque appareil d'acquisition
- comparer le mot numérique sélectionné avec plusieurs mots numériques représentatifs de valeurs-seuils délimitant plusieurs plages sur l'échelle de variation admissible par les moyens de numérisation,
- choisir la valeur de gain optimale applicable à l'amplificateur pour au moins un cycle ultérieur, et
- commander les circuits de commutation pour sélectionner cette valeur optimale du gain.

9. Dispositif selon la revendication précédente, caractérisé en ce que chaque appareil d'acquisition comporte un ensemble de traitement (2,7) réalisant la sélection des mots numériques.

## Patentansprüche

1. Verfahren zur Erfassung von durch seismische Empfänger aufgefangenen Signalen mit automatischer, zyklischer, in regelmäßigen Zeitintervallen abhängig von der Dauer aufeinanderfolgender seismischer Sende-/Empfangszyklen durchgeführter Anpassung der auf diese angewendeten Verstärkung, wobei die Signale durch eine Erfassungsvorrichtung gesammelt werden, die wenigstens ein Erfassungsgerät (Ai) umfaßt, das in einer Explorationszone angeordnet ist, um die Signale zu sammeln, die von wenigstens einem der an die Formationen gekoppelten seismischen Empfänger in Reaktion auf Erschütterungen empfangen werden, die von einer Quelle (T) ausgeübt werden, wobei dieses Gerät wenigstens einen Verstärker (PA1-PAk) der Verstärkungsumschaltschaltungen zugeordnet ist und in der Lage ist, eine bestimmte Zahl p verschiedener Verstärkungen g1, g2, ..., gp auf die seismischen Signale anzuwenden, Digitalisiermittel (AD1-ADk) vom Überabtastungstyp, die aufeinanderfolgende Digitalwörter erzeugen, Mittel zum Speichern (M) der erzeugten Digitalwörter und eine Steueranordnung, die eine Verarbeitungseinheit (2,7) enthält, umfaßt, dadurch gekennzeichnet, daß es umfaßt:
- das Auswählen, unter den von jedem Erfassungsgerät wenigstens während der Dauer eines Zyklus erfaßten Digitalwörtern, eines Digitalworts, das für die maximale Energie wenigstens eines empfangenen seismischen Signals repräsentativ ist,
- das Vergleichen des ausgewählten Digitalworts mit mehreren Digitalwörtern, die für Grenzwerte repräsentativ sind, die mehrere Bereiche auf der für die Digitalisiermittel zulässigen Veränderungsskala begrenzen,
- das Auswählen, in Funktion des Bereichs, des optimalen auf den Verstärker anwendbaren Verstärkungswerts für wenigstens einen späteren Zyklus, und
- das Steuern der Verstärkungsumschaltschaltungen zum Anwenden dieses optimalen Verstärkungswerts.

2. Verfahren nach Anspruch 1, dadurch gekennzeichnet, daß es das Auswählen eines Verstärkungswerts in Funktion mehrerer am Ausgang mehrerer aufeinanderfolgender Zyklen ausgewählter Digitalwörter umfaßt.

3. Verfahren nach Anspruch 1, dadurch gekennzeichnet, daß es das Auswählen eines optimalen Verstärkungswerts in Funktion der Veränderungen des Werts der ausgewählten Digitalwörter innerhalb der durch die Grenzwerte begrenzten Bereiche und über die Dauer mehrerer aufeinanderfolgender Zyklen umfaßt.

4. Verfahren nach Anspruch 3, dadurch gekennzeichnet, daß die Auswahl der optimalen Verstärkung unter Berücksichtigung der Richtung und Amplitude der Veränderungen durchgeführt wird.

5. Verfahren nach einem der vorhergehenden Ansprüche, dadurch gekennzeichnet, daß es das Auswählen eines Verstärkungswerts in Funktion von mehreren ausgewählten Digitalwörtern umfaßt, die jeweils mehreren durch ein und dasselbe Erfassungsgerät empfangenen Signalen entsprechen.

6. Verfahren nach einem der vorhergehenden Ansprüche, dadurch gekennzeichnet, daß das Auswählen des für die Energie der empfangenen Signale repräsentativen Digitalworts durchgeführt wird durch ein direktes Vergleichen der nacheinander während eines ausgewählten Zeitintervalls erzeugten Digitalwörter.

7. Verfahren nach einem der Ansprüche 1 bis 6, dadurch gekennzeichnet, daß das Auswählen des für die Energie der empfangenen Signale repräsentativen Digitalworts durchgeführt wird durch Vergleichen der während eines ausgewählten Zeitintervalls erzeugten Digitalwörter am Ausgang jedes Zyklus.

8. Vorrichtung zur Erfassung von durch seismische Empfänger aufgefangenen Signalen mit automatischer, zyklischer, in regelmäßigen Zeitintervallen, abhängig von der Dauer aufeinanderfolgender seismischer Sende-/Empfangszyklen durchgeführter Anpassung der auf diese angewendeten Verstärkung, mit wenigstens einem in einer Explorationszone angeordneten Erfassungsgerät (Ai) zum Sammeln der Signale, die von einem oder mehreren an die Formationene gekoppelten seismischen Aufnehmern in Reaktion auf ausgeübte Erschütterungen empfangen sind, wobei das Gerät wenigstens einen Verstärker (PA), der Verstärkungsumschaltschaltungen zugeordnet ist und in der Lage ist, eine bestimmte Anzahl p verschiedener Verstärkungen (g1, g2, ..., gp) auf die seismischen Signale anzuwenden, Digitalisiermittel (AD) vom Überabtastungstyp, die aufeinanderfolgende Digitalwörter erzeugen, Mittel zum Speichern (M) der Digitalwörter, eine Steueranordnung, die eine Verarbeitungseinheit (2,7) und Mittel zur Übertragung von Daten auf einen Übertragungskanal umfaßt, dadurch gekennzeichnet, daß sie Mittel zur Verstärkungssteuerung umfaßt, die eingerichtet sind, um:
- unter den wenigstens während der Dauer eines Zyklus erzeugten Digitalwörten ein Digitalwort auszuwählen, das für die maximale Energie wenigstens eines empfangenen seismischen Signals repräsentativ ist, für jedes Erfassungsgerät,
- das ausgewählte Digitalwort mit mehreren Digitalwörtern zu vergleichen, die für Grenzwerte repräsentativ sind, die mehrere Bereiche auf der für die Digitalisiermittel zulässigen Veränderungsskala begrenzen,
- den optimalen, auf den Verstärker anwendbaren Verstärkungswert für wenigstens einen späteren Zyklus zu wählen, und
- die Umschaltschaltungen zu steuern, um diesen optimalen Verstärkungswert auszuwählen.

9. Vorrichtung nach dem vorhergehenden Anspruch, dadurch gekennzeichnet, daß jedes Erfassungsgerät eine Verarbeitungsanordnung (2,7) umfaßt, die die Auswahl der Digitalwörter durchführt.

## Claims

1. A method of acquiring signals picked up by seismic receivers with automatic cyclic matching performed at regular intervals, depending on the duration of successive seismic transmission-reception cycles, of the gain to be applied thereto, these signals being collected by an acquisition system consisting of at least one acquisition device (Ai) positioned in an exploration zone in order to collect the signals received by at least one seismic receiver (Ri1-Rik) coupled with the formations in response to vibrations applied by a source (T), this device having at least one amplifier (PA1-PAk) linked to gain switching circuits and likely to apply a certain number p of different amplification gains, g1, g2, ..., gp, to the seismic signals, digitising means (AD1-ADk) of the over-sampling type producing successive digital words, storage means (M) for the digital words produced and a control unit including a processing unit (2, 7), characterised in that it consists in:
- selecting from the digital words produced by each acquisition device, at least during one cycle, a digital word representative of the maximum energy of at least one seismic signal received,
- comparing the digital word selected with several digital words representing threshold values delimiting several ranges on the scale of variation permitted by the digitising means,
- as a function of the range, choosing the optimum gain value to be applied to the amplifier for at least one subsequent cycle, and
- controlling gain switching circuits to apply this optimum gain value.

2. A method as claimed in claim 1, characterised in that it consists in choosing a gain value on the basis of several digital words selected after several successive cycles.

3. A method as claimed in claim 1, characterised in that it consists in choosing an optimum gain value on the basis of variations in the value of the digital words selected within ranges delimited by threshold values and during successive cycles.

4. A method as claimed in claim 3, characterised in that the optimum gain is chosen by taking account of the direction and amplitude of said variations.

5. A method as claimed in one of the preceding claims, characterised in that a gain value is chosen on the basis of several selected digital words corresponding respectively to several signals received by a same acquisition device.

6. A method as claimed in one of the preceding claims, characterised in that the digital word representative of the energy of the signals received is selected by making a direct comparison of the digital words produced successively over a selected time period.

7. A method as claimed in one of claims 1 to 6, characterised in that the digital word representative of the energy of the signals received is selected by means of a comparison after each cycle of the digital words produced during a selected period of time.

8. A device for acquiring signals picked up by seismic receivers with automatic cyclic matching performed at regular intervals, dependent on the duration of successive seismic transmission-reception cycles, of the gain to be applied thereto, comprising at least one acquisition device (Ai) positioned in an exploration zone in order to collect the signals received by one or more seismic receivers (Ril-Rik) coupled with the formations in response to applied vibrations, this device having at least one amplifier (PA) linked to gain switching circuits and likely to apply a certain number p of different amplification gains (gl, g2, ..., gp) to the seismic signals, digitising means (AD) of the over-sampling type producing successive digital words, storage means (M) for the digital words produced, a control unit including a processing unit (2, 7) and means for transmitting data on a transmission channel, characterised in that it has gain control means designed to:
- select from the digital words produced, at least during one cycle, one digital word representative of the maximum energy of at least one seismic signal received by each acquisition device,
- compare the selected digital word with several digital words representative of threshold values delimiting several ranges of scale of variation permitted by the digitising means,
- choose the optimum gain value applicable to the amplifier for at least one subsequent cycle, and
- command the switching circuits to select this optimum gain value.

9. A device as claimed in the preceding claim, characterised in that each acquisition device has a processing unit (2, 7) to select the digital words.
